# EUROPEAN PATENT SPECIFICATION

(11) **EP 3 727 939 B1**
(45) Date of publication and mention of the grant of the patent: **16.03.2022**
(21) Application number: 18822335.8
(22) Date of filing: 17.12.2018
(51) Int. Cl.: B60R 11/00, A24F 19/00, B60N 3/08

(54) **CONTAINER WITH SUPPORT MEANS**
BEHÄLTER MIT STÜTZMITTELN
RÉCIPIENT DOTÉ D'UN MOYEN DE SUPPORT

(30) Priority: 18.12.2017 EP 17208200
(43) Date of publication of application: 28.10.2020
(73) Proprietor: Philip Morris Products S.A., 2000 Neuchâtel (CH)
(72) Inventor: TUNG, Jeffrey, San Francisco, California 94123 (US)
(74) Representative: Spencer, James Michael
(86) International application number: PCT/EP2018/085332
(87) International publication number: WO 2019/121580

(56) References cited:
- EP-A2- 2 193 959
- DE-A1-102009 034 921
- DE-A1-102010 056 291
- FR-A1- 2 863 967
- US-A- 4 473 084
- US-A1- 2010 051 040

## Description

The present invention relates to containers for use with consumer articles such as aerosol-generating articles, aerosol-generating devices and packets of aerosol-generating articles. In particular, the invention relates to containers that include support means and that are suitable for use in vehicles.

After consuming an aerosol-generating article, such as a cigarette, it may be difficult for a user to find a convenient location to dispose of the used article. For example, the user may not be located near to an ashtray or a suitable disposal bin. Therefore, in some circumstances, the user may find it difficult to appropriately dispose of the used article. This problem may be exacerbated when the aerosol-generating article is heated during use without combustion. For example, a number of aerosol-generating systems are known in which an aerosol-generating article, which may be cigarette-like in size and shape, are electrically heated rather than combusted. In such systems, the article may be approximately the same size both before and after use. Therefore, disposal of such articles may be more difficult for a user when compared to a conventional cigarette of which only the filter typically remains after use.

Containers for use with consumer articles are known in the art. For example, the containers with traditional ash trays, which provide a tray or dish to receive the waste products after consumption of conventional cigarettes or similar articles. Ash trays can also be used for the waste products of aerosol-generating devices, such as heated tobacco rods. Waste containers such as ashtrays are not typically used in conjunction with containers of unused consumer articles. A user typically carries consumer articles separately to any waste container. Typically, containers of consumer articles, and also aerosol-generating devices, are carried by a user so that they are on hand when needed. In contrast, a container such as an ashtray is typically limited by its location. This may be problematic when a user is on the move.

Patent US 1,614,265 discloses an ash tray combined with a cigarette holder. The combined ash tray and holder is designed to be placed on a table top, and can receive both the waste from a used cigarette in a compartment and unused cigarettes in individual holders. However, the device disclosed in this patent is not suitable for use in a moving vehicle. The small openings to receive the cigarettes would not be easy to access singlehandedly while driving. Additionally, the device could not be positioned stably within reaching distance of a driver, but would be liable to moving or falling during driving. Finally, the device disclosed in this patent is only suitable for use with conventional cigarettes and not with more modern aerosol-generating articles or devices.

EP 2193959 A2 discloses an electronic interface device having a support base installable inside a compartment of a vehicle. The support base comprises a body substantially shaped like a cup and suitable for containing an electronic circuit. The support base also has a cover that can be fixed to the body and a seat for housing a digital file player, the seat being composed of a slot on the cover which is shaped so as to reproduce the profile of the digital file player.

Therefore, it would be desirable to provide a device for holding consumer articles and receiving waste in a vehicle that could conveniently be used by the driver while driving.

According to the present invention there is provided a container configured to be received in a vehicle cup holder, the container comprising a body portion defining an internal compartment, the body portion comprising a closed bottom end and an open top end. The container also comprises a cover portion configured to cover the open top end of the body portion, wherein the cover portion comprises an aperture for accessing the internal compartment of the body portion, and support means for supporting one or more consumer articles on an outer surface of the cover portion, and wherein the support means comprise at least one recessed portion for receiving one or more consumer articles, the recessed portion being defined by two parallel upwardly projecting plates positioned on the cover portion.

As used herein, the term "consumer article" refers to an article that may be used by a consumer in any one of a manner of ways. The article may be a single use article that must be disposed of after use. The article may be reusable, and the consumer may wish to be able to replace or store the article in a holder between uses. Examples of consumer articles, such as aerosol-generating articles and aerosol-generating devices are given below. The term consumer articles may also refer to packages or containers of any of the articles discussed above.

As used herein, the term "aerosol-generating article" refers to an article comprising an aerosol-forming substrate that is capable of releasing volatile compounds that can form an aerosol. The aerosol-forming substrate may release volatile compounds when heated. The aerosol-generating article may be a cigarette and the aerosol-forming substrate may comprise a tobacco rod. The aerosol-generating article may be designed to be heated within an aerosol-generating device, for example with an electrical heater.

As used herein, "aerosol-generating device" relates to a device that interacts with aerosol-forming substrate of an aerosol-generating article to generate an aerosol. An aerosol-generating device may comprise one or more components used to supply energy from a power supply to an aerosol-forming substrate of an aerosol-generating article to generate an aerosol that is inhalable by a user. An aerosol-generating device may comprise a power supply which may be an external power supply or an on-board power supply forming part of the aerosol-generating device.

As used herein, the terms "top", "bottom", "side", "front", "back", "lower" and "upper" refer to the relative positions of portions of containers according to the invention and components thereof when the container is in an upright position as shown in the example embodiments in the accompanying figures and the cover portion of the container is at the top of the container. When describing containers according to the present invention, these terms are used irrespective of the orientation of the container being described.

The container of the present invention provides both a receptacle for waste and a holder for holding consumer articles. The advantage of providing both uses in the container means that a user only requires a single container. The two uses are integrated to provide a holding means that is easy to access to obtain a consumer article and a waste receptacle that is just as easy to access after use. The consumer articles are held by a support means that prevents the articles moving or slipping or falling from the container. The support means is part of a cover that prevents waste from escaping the container once inserted, which improves the hygiene of the container. In particular, providing both the holding means and the waste receptacle as part of the same container means that a user can remove articles from or insert waste into the container one handed and without necessarily looking directly at the container, as the locations for both are so close together. This is particularly advantageous for drivers of vehicles where only one hand is available for use with a consumer article, and the attention of the driver should be kept on the road for example. Maintaining the container of the present invention in a consistent position within a vehicle, such as in a cup-holder, allows a driver to repeatedly reach the container both to remove articles and to insert waste.

The internal compartment of the container may be defined by a bottom wall and at least one side wall extending from the bottom wall. The side walls may extend substantially perpendicular to the bottom wall. The at least one side wall may be a single wall extending around the full circumference of the bottom wall, or a plurality of side walls defining different faces of the container. The termination of the side walls may define the open top end of the container. The internal compartment is preferably configured as a waste compartment to receive consumer articles to be disposed of. In particular, the internal compartment may be configured to receive single use consumer articles, such as single use aerosol-generating articles, after use. In this manner the internal compartment of the container may act as a bin, ashtray or waste receiver. Advantageously, the provision of a container of this sort allows a vehicle driver to dispose of a used consumer article whilst driving. The container may be in easy reach of the driver's position, and a used consumer article for disposal can be dropped into a cup-shaped container with ease.

Typically, containers configured to be received in a vehicle cup holder are cup-shaped containers. As used herein, the term "cup-shaped" refers to a shape of a container both when it is filled and when it is empty. A cup-shaped container provides an internal cavity or space when the container is empty and when the container is filled. A cup-shaped container may be referred to as a vessel. Preferably, the cup-shaped container may have an inner cavity or hollow chamber configured to hold solid or liquid matter. Preferably, the external shape of the container may resemble a cup or similar beverage container in order to be receivable in the cup holder of a vehicle. A cup holder is typically a circular ring or body with a circular orifice, attached to the vehicle within reach of the driver and configured to receive a vessel or cup with a cylindrical transverse cross section. The cup holder may additionally include a base portion to receive the closed bottom end of a container.

As above, the container of the present invention includes a cover portion configured to cover the open top end of the of the body portion. The cover portion may cover substantially the entire open top end of the container. In this configuration the cover portion may seal the internal compartment of the body portion. The use of a cover portion may retain any matter within the internal compartment during movement of the vehicle. The cover portion may prevent or reduce spillages from the internal compartment. In an embodiment where the cover portion seals the internal compartment, the cover portion may also prevent odours from the used consumer articles escaping the internal compartment. The use of a cover portion may provide a more hygienic container.

As above, the container of the present invention includes an aperture in the cover portion for accessing the internal compartment of the body portion. Preferably, the aperture may be sized in order to receive a used consumer article for disposal. The aperture may be located towards one side of the cover portion. The aperture may be located centrally within the cover portion. The aperture may take any suitable shape and size, depending on the consumer articles to be placed in the internal compartment. For example, the aperture may be circular. The aperture may be elongate. The aperture may be semi-circular. The aperture extends from the outer surface of the cover portion to a lower surface of the cover portion, the lower surface directed into the internal compartment of the container. A user may insert used consumer articles through the aperture, into the internal compartment of the container.

As above, the container of the present invention includes a support means on the cover portion for supporting one or more consumer articles. Preferably, the support means may be located on an outer surface of the cover portion such that a user or driver can access any consumer articles held by the support means whilst driving. The cover portion may be the uppermost part of the container, so the outer surface of the cover portion may be the closest part of the container to the driver when the container is located in a cup-holder of a vehicle. The support means may be configured to support a single consumer article. The support means may be configured to support two consumer articles simultaneously. Preferably, the support means may be configured to support two or more consumer articles simultaneously, wherein the two consumer articles are not the same as each other. For example, the support means may be configured to support an aerosol-generating article and an aerosol-generating device. The support means may be configured to support an aerosol-generating article and a packet of aerosol-generating articles. The support means may hold the consumer article in position to prevent the consumer article escaping or falling from the container when the vehicle is in motion. The support means may provide a location at which the driver can access consumer articles without looking directly at it because the consumer articles are held in the same position during driving.

Advantageously, the support means may comprise at least one recessed portion for receiving one or more consumer articles. The recessed portion may be a recess in the outer surface of the cover portion. The recessed portion may be a blind cavity in the outer surface of the cover portion. The recessed portion may be configured to receive a consumer article such as an aerosol-generating device or a packet of aerosol-generating articles. A consumer article may be inserted into the recessed portion from above, and removed by pulling upwards. The recessed portion may comprise sides defining the recessed portion. The sides may engage with the consumer article to prevent sideways movement while the consumer article is held by the support means. The recessed portion may be configured to retain the consumer article within the recessed portion by interference fit.

Preferably, the recessed portion comprises a cross section configured to substantially match an external transverse cross section of a consumer article. This configuration provides a recessed portion that abuts or fits close to the walls or edges of a consumer article. This provides support in all sideways directions for the consumer article. The transverse cross section is the cross section perpendicular to the longitudinal direction of the article. Most consumer articles, such as packets of aerosol-generating articles or aerosol-generating devices, are longer in one direction than the other. The longest extent of the article provides the longitudinal direction. The recessed portion may be square to receive an article with a square transverse cross section. The recessed portion may be circular to receive an article with a circular cross section. The recessed portion may be square with rounded edges to receive an article with a transverse cross section which is square and has rounded edges. The recessed portion may be sized to receive an aerosol-generating device in an upstanding position. The recessed portion may be sized to receive a packet of aerosol-generating articles in an upstanding position. The recessed portion may be sized to receive an individual aerosol-generating article in an upstanding position.

In certain preferred embodiments of the invention, the recessed portion is an elongate channel. The elongate channel may be positioned on the outer surface of the cover portion. The elongate channel may be configured to receive elongate aerosol-generating articles. The elongate channel may be sized and shaped to receive aerosol-generating articles such as a cigarette or an alternative tobacco rod laying on its side. A user or driver may access an aerosol-generating article, such as an un-used cigarette or tobacco rod from its location in the elongate channel on the outer surface of the cover portion.

Preferably, the recessed portion is defined by projections protruding from the outer surface of the cover portion. The projections may define edges of the recessed portion. The projections may also be considered to be projecting from the outer surface of the cover portion.

The projections may be two opposing projections defining an elongate channel between the two opposing projections. The projections may define the full periphery of the recessed portion. When the recessed portion is an elongate channel, the channel may be defined by longitudinal projections projecting from the outer surface of the cover portion. The longitudinal projections may define edges of the elongate channel. The longitudinal projections may prevent an article positioned within the channel moving or escaping from the channel. The elongate channel may be defined by two, parallel, longitudinal projections.

The recessed portion may be defined by within the body of the cover portion. The recessed portion may be defined by a groove cut into the body of the cover portion. The recessed portion may sit below the level of the surface of the cover portion. This arrangement may provide a cover portion with a substantially flat surface. A flat surface may be less susceptible to damage than a surface including projecting elements.

Advantageously, the projections are integrally formed with the cover portion. The cover portion may be shaped to provide the projections. The cover portion may be shaped to provide two, parallel, longitudinal projections in the outer surface. The cover portion may be shaped to provide connected projections defining the periphery of a recessed portion.

The projections may be formed separately to the cover portion and attached to the cover portion. The projections may each be attached to the cover portion separately. The projections may be connected by a base section, and the base section attached to the cover portion.

The recessed portion may be defined by two, parallel, upwardly projecting plates positioned on the cover portion. For example, the recessed portion may be defined by two, parallel, upwardly projecting plates mounted on the cover portion. The plates may extend from the outer surface of the cover portion. The plates may define the recessed portion between inner faces of the plates. The plates may be connected by a base plate. The base plate may sit on the outer surface of the cover portion. The recessed portion may be defined by a combination of a recess in the body of the cover portion and two, parallel, upwardly projecting plates. In this embodiment, the plates may extend from the lowest point of the recess, upwards past the outer surface of the cover portion. A base plate connecting the plates may sit at the lowest point of the recess in the body of the cover portion.

At least one of the plates may be shaped such that the edge, protruding outwardly from the cover portion, forms an arc. In other words, at least one of the plates may have an arc-shaped circumferential edge. In this context, "arc" refers to any connected part of a circle, a conic section (ellipse, parabola or hyperbola), or an oval. The edge may be symmetric with respect to a vertical axis defined by the midpoint of the base of the plate and the upper-most point of the arc. The edge may form part of an ellipse with an eccentricity less than 0.75, or less than 0.5, or less than 0.3, or less than 0.1. The edge may form part of a circle. The edge may take a form of a semi-circle.

Both the plates may be of the same shape. Both plates may be of the same size (i.e. same shape, same height and same width). One of the plates may be of a greater height than the other plate, of a different shape, or both a greater height and a different shape. For example, the plate closer to the edge of the container (and thus further from the centre of the container) may be or a greater height, greater width, or both greater height and greater width. For example, the edge of the plate close to the centre of the container may be a semi-circle, while the edge of the plate closer to the edge of the container may be of a shape of an ellipse, an oval, or a square with rounded edges. In case the edge of the plate closer to the edge of the container is elliptic, the ellipse may be oriented such that its semi-major axis is parallel to the vertical axis of the container.

It is advantageous to provide at least one plate and preferably both the plates such that the edge of the plate forms part of an arc. In other words, both of the plates may have an arc-shaped circumferential edge. The arc-shaped edge facilitates insertion of the consumer article to be held between the plates. With an arc-shaped edge, it is easier to insert the consumer article between the plates. In particular, it is easy to insert the consumer article from an angle (i.e. the consumer article may be inserted from top of the arc, or from any side. This is of an advantage especially when the container is used in a car. While driving, the driver does not have to take their focus off the road to insert the article in a correct way, from the correct direction, because the consumer article may be inserted from any direction. The arc-shaped edges are advantageous also in a situation where the distance between the plates is same or very similar to the dimensions of the consumer article to be inserted.

The height of the at least one plate (i.e. the plate the circumferential edge of which forms an arc) may be between 5 mm and 50 mm. The height of the at least one plate may be between 10 mm and 45 mm. The height of the at least one plate may be between 15 mm and 40 mm. The height of the at least one plate may be between 20 mm and 35 mm. The height of the at least one plate may be between 20 mm and 30 mm. In this context, the "height of the plate" refers to the distance from base of the cover portion to the highest peak of the arc.

The distance between the plates may be between 10 mm and 25 mm. The distance between the plates may be between 12 mm and 18 mm. The distance between the plates may be between 14 mm and 21 mm. The distance between the plates may be between 15 mm and 20 mm. For example, if the distance between the plates is 20 mm, the plates may hold between them both a packet of aerosol-generating articles which may be e.g. 15 mm thick, or they may hold an aerosol-generating device which may be 20 mm thick, at the user's choice. Therefore, the container and in particular the plates may be designed to be able to hold both the packet of aerosol-generating articles and the aerosol-generating device.

The walls of the plates may have a thickness of between 0.8 mm and 1.2 mm. The walls of the plates may have a thickness of between 0.8 mm and 1 mm. The walls of the plates may have a thickness of 1 mm. Such thickness may provide enough structural integrity for the plates to be able to hold a consumer article, for example an aerosol-generating device.

The container may be made of plastic or metal. The cover of the container may be made of plastic or metal. The plates may be made of plastic or metal.

Advantageously, the support means may comprise a plurality of recessed portions. Preferably, the support means may comprise both a recessed portion with a cross section configured to match an external transverse cross section of a consumer article and an elongate channel. In this way the support means may support two, different, consumer articles. For example, the support means may support both an aerosol-generating device and an aerosol-generating article for use with the device simultaneously. Similarly, the support means may support both an aerosol-generating article and a packet of generating articles. The support means may support a plurality of aerosol-generating articles either upstanding in recessed portions having cross sections to match the transverse cross sections of the articles, or laying down in elongate channels. A plurality of elongate channels may be parallel to each other. Each of the plurality of elongate channels may have the same width. Each of the plurality of elongate channels may have the same length. Each of the plurality of elongate channels may have the same depth. Each of the plurality of elongate channels may have different dimensions. Each elongate channel may have dimensions configured to receive a particular aerosol-generating article.

Advantageously, the cover portion may further comprise a funnel, the funnel extending from the aperture into the internal compartment of the body portion. The funnel typically has a wide upper end, adjacent to the cover portion, and a narrow lower end. The funnel may be tapered, such that the diameter decreases from the wide upper end and the narrow lower end. For example, at least a portion of the funnel may be cone-shaped or trumpet-shaped. The funnel may have a partially flat wall. The tapered body may direct waste from the wide upper end to the narrow lower end. The narrow lower end of the funnel may be positioned within the internal compartment of the body portion. The wide upper end may extend around the full periphery of the aperture. In this arrangement, any matter inserted through the aperture will enter the wide upper end of the funnel. The narrow lower end may direct matter into the internal compartment of the container. The narrow lower end may reduce the risk of matter escaping or exiting the internal compartment of the container. The narrow lower end may minimise any odours escaping the internal compartment of the container.

Advantageously, the cover portion may further comprise a lid. The lid may be movable between a closed position in which the lid covers the aperture, and an open position in which the internal compartment is accessible through the aperture. The lid may allow the aperture to be closed and the internal compartment of the body portion to be sealed. In the open position, matter may be inserted into the internal compartment through the aperture. In the closed position, matter within the internal compartment may be prevented from escaping or accidently exiting the container. In the closed position, the lid may minimise odours escaping the internal compartment of the container.

In a particular embodiment, the cover portion may comprise both a lid and a funnel. The lid may be movable between a first position in which the lid covers the aperture and the wide first end of the funnel, and a second position in which the internal compartment is accessible through the aperture and the funnel.

Advantageously, the lid may be hingedly connected to the cover portion. The lid may be openable with a single hand by a driver of a vehicle. The lid may be irremovably secured to the cover portion. In this arrangement, there may be little risk that the lid is removed and dropped or lost by a driver of a vehicle. The lid may be hingedly connected to the cover portion such that the lid is openable inwards. In this embodiment, in the first position, the lid may extend from the cover portion into the internal compartment of the cover portion. The lid may include a biasing means. The biasing means may be configured to retain the lid in the second position. In this embodiment, a user may be able to push downwards on the lid in order to move it from the second position to the first position in order to access the internal compartment of the container.

Preferably, the cover portion is removably connected to the body portion. The cover portion may be removable from the body portion of the container in order to empty the container. The cover portion may comprise a helical thread and the side walls of the body portion may comprise a complimentary helical threat such that the cover portion and the body portion may be removably connected. The cover portion may be removably connected to the side walls of the body portion by interference fit. The cover portion may comprise one or more clips. The clips may be configured to secure the cover portion to the side walls of the body portion.

Advantageously, an inner surface of the cover portion, opposite the outer surface, may comprise a gasket for engaging with an inner face of the top end of the body portion such that the cover portion is retained on the body portion. The gasket may provide a mechanical seal between the cover portion and the side walls of the body portion. The gasket may be a ring configured to engage with the termination of the side walls of the body portion. The gasket may be formed of a resilient material such as rubber. The term "inner surface" is used throughout the specification to refer to the surface of the assembled container that is facing towards the interior cavity of the container.

Preferably, the body portion may be cylindrical. The body portion may be elongate, with a longitudinal central axis. Advantageously, the body portion has a circular transverse cross section. The bottom end of the body portion may be formed of a circular wall. The side wall of the body portion may be a single side wall extending around the circumference of the bottom wall. A cylindrical body portion may fit snugly into the circular ring of a conventional cup-holder in a vehicle. The body portion may have an oblong transverse cross section. The term "longitudinal" refers to a direction from bottom to top or vice versa. As above, the term "transverse" refers to a direction perpendicular to the longitudinal direction.

Preferably, the body portion may be tapered, such that the diameter decreases from the top end to the bottom wall. The top end of the body portion may have a first, larger, diameter. The cover portion may be configured to have the same or similar diameter as the top end of the body portion. The bottom wall may have a second, narrower, diameter. In this tapered configuration the bottom wall may be received in a conventional cup-holder, and the container can be lowered into the cup-holder until the side wall of the body portion engages with the inner diameter of the ring of the cup-holder.

In some embodiments, the application provides a container configured to be received in a vehicle cup holder, the container comprising a body portion defining an internal compartment, the body portion comprising a closed bottom end and an open top end; and a cover portion configured to cover the open top end of the body portion, wherein the cover portion comprises an aperture for accessing the internal compartment of the body portion, and support means for supporting one or more consumer articles on an outer surface of the cover portion.

The support means of the container may comprise at least one recessed portion for receiving one or more consumer articles.

The recessed portion may comprise a cross section configured to match an external transverse cross section of a consumer article. The recessed portion may be an elongate channel. The recessed portion may be defined by projections protruding from the outer surface of the cover portion.

The projections may be integrally formed with the cover portion.

The support means may comprise a plurality of recessed portions. The support means may comprise at least one recessed portion having a cross section configured to match an external transverse cross section of a consumer article, and at least one elongate channel defined by projections protruding from the outer surface of the cover portion.

The cover portion may further comprise a funnel, the funnel extending from the aperture into the internal compartment of the body portion. The cover portion may further comprise a lid, the lid movable between a first position in which the lid covers the aperture, and a second position in which the internal compartment is accessible through the aperture. The lid may be hingedly connected to the cover portion. The cover portion may be removably connected to the body portion.

An inner surface of the cover portion, opposite the outer surface, may comprise a gasket for engaging with an inner face of the top end of the body portion such that the cover portion is retained on the body portion.

The body portion of the container may be tapered, such that the diameter decreases from the top end to the bottom end.

The consumer articles may comprise one or more of an aerosol-generating article, an aerosol-generating device, and a packet of aerosol-generating articles.

Containers according to the present invention may be formed of any suitable material or combination of materials. Preferably, containers according to the present invention are formed of a moulded plastic material.

Particular embodiments of the invention will be further described by way of example only and with reference to the accompanying figures, in which:
Figures
Figure 1a is a perspective view of a container according to a first embodiment of the present invention;
Figure 1b is a side view of the container of Figure 1a;
Figure 1c is a side view of the container of Figure 1a with a funnel on the cover portion;
Figure 2 is a perspective view of a container according to a second embodiment of the present invention;
Figure 3 is a perspective view of a container according to a third embodiment of the present invention;
Figure 4 is a perspective view of a container according to a fourth embodiment of the present invention;
Figure 5a is a perspective view of a container according to a fifth embodiment of the present invention;
Figure 5b is a side view of the container of Figure 5a in position in a cup-holder of a vehicle;

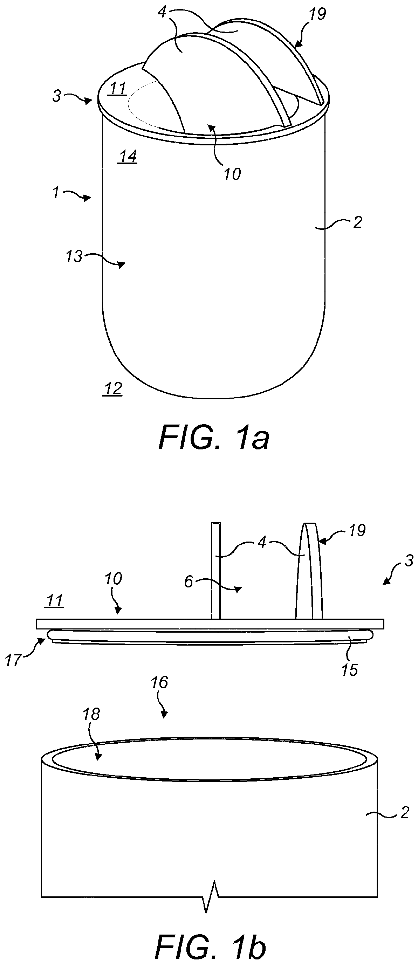

Figures 1a and 1b show a container 1 according to a first embodiment of the present invention.
The container 1 is formed of a body portion 2 and a cover portion 3. The body portion 2 is formed of a cylindrical side wall 13 with a circular cross section. The side wall 13 tapers at the bottom end 12. The side wall 13 connects to a base or bottom end wall (not shown) at the bottom end 12. At the top end 14 of the side wall 13, the termination of the side wall 13 defines a circular opening 16.

The cover portion 3 is a flat, circular, cover. The cover portion 3 has an outer surface 11 and an inner surface 17 opposite the outer surface 11. The inner surface 17 is exposed to the internal compartment of the body portion 2 when the cover portion 3 is located on the body portion 2. The cover portion 3 is shaped such that the periphery of the inner surface 17 engages with the termination of the side walls 13 that define the circular opening 16. When the cover portion 3 is located over the circular opening 16, the cover portion 3 seals the internal compartment of the body portion. The inner surface 17 of the cover portion 3 includes a gasket 15 extending around the inner surface 17, set inwards from the edge of the cover portion 3. When the cover portion 3 is positioned over the body portion 2, the gasket 15 engages with the inner face 18 of the side wall 13.

The outer surface 11 of the cover portion 3 includes supporting means 4. In the first embodiment, the supporting means 4 is in the form of two, parallel, upwardly projecting plates 19. The plates 19 extend perpendicularly to the cover portion 3. The plates 19 are semi-circular in shape, with the flat side of the semi-circle adjacent the outer surface 11 of the cover portion 3 and the arc of the semi-circle extending away from the cover portion with the highest point at the centre of the arc. A recess 6 is defined between the plates 19. The recess 6 is sized to receive a packet of aerosol-generating articles 7 or an aerosol-generating device 9. The distance between the plates is between 15 mm and 20 mm. The height of the plates is between 20 mm and 30 mm. The plates 19 are formed integrally with the outer surface 11 of the cover portion 3.

The cover portion 3 also includes an aperture 10 extending through the cover portion 3. The aperture 10 is extends across approximately one half of the cover portion 3, and is semi-circular in shape, with the flat side of the semi-circle extending across the diameter of the cover portion 3, and the arc of the semi-circle following the line of the edge of the cover portion 3.

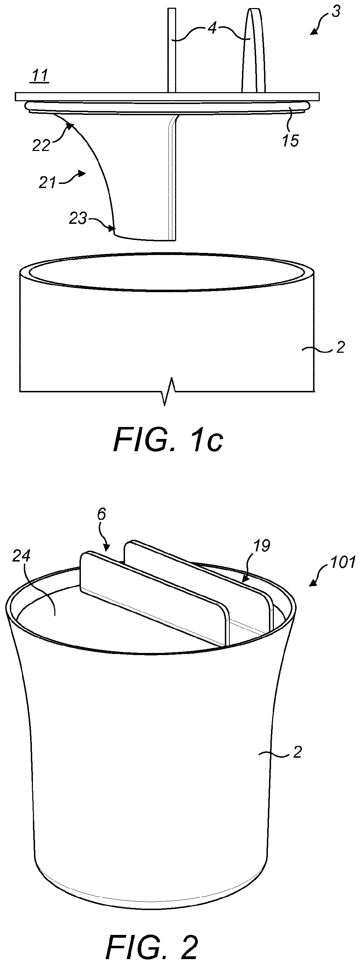

Figure 1c shows an alternative cover portion 3 of the first embodiment of the present invention that includes a funnel 21. The funnel 21 extends from the inner surface 17 of the cover portion 3 into the internal compartment defined by the body portion 2. The wide, top end 22 of the funnel 21 is positioned around the aperture 10 to catch all waste being inserted through the aperture 10. The funnel 21 is tapered to create a narrow end 23.

Figure 2 shows a container 101 according to a second embodiment of the present invention. The body portion 2 of the container 101 has the same structure as the body portion 2 of the first embodiment. The cover portion 3 of the second embodiment is sized differently to the cover portion 3 of the first embodiment. The cover portion 3 of the second embodiment has a diameter smaller than the opening 16 of the body portion 2. The cover portion 3 of the second embodiment sits within the opening 16, surrounded by the top end 14 of the side wall 13 in order to seal the internal compartment.

In the second embodiment, the recess 6 is defined by plates 19 that are not integral to the outer surface 11 of the cover portion 3. The plates 19 are joined by a base plate along a lower edge. The plates 19 are received in a groove in the outer surface 11 of the cover portion 3.

In the second embodiment, the aperture 10 is covered by a lid 24. The lid 24 is a hinged lid, with a hinge positioned adjacent the supporting means 4 along the diameter of the circular cover portion 3. The lid 24 opens inwards, that is, in an open position the lid 24 extends downward from the cover portion 3 into the internal compartment of the body portion 2. The lid 24 is biased in a closed position wherein it covers the aperture 10. When a user applied a downward force on the lid 24, the lid 24 opens inwardly. When the force is removed, the lid 24 returns to the closed position.

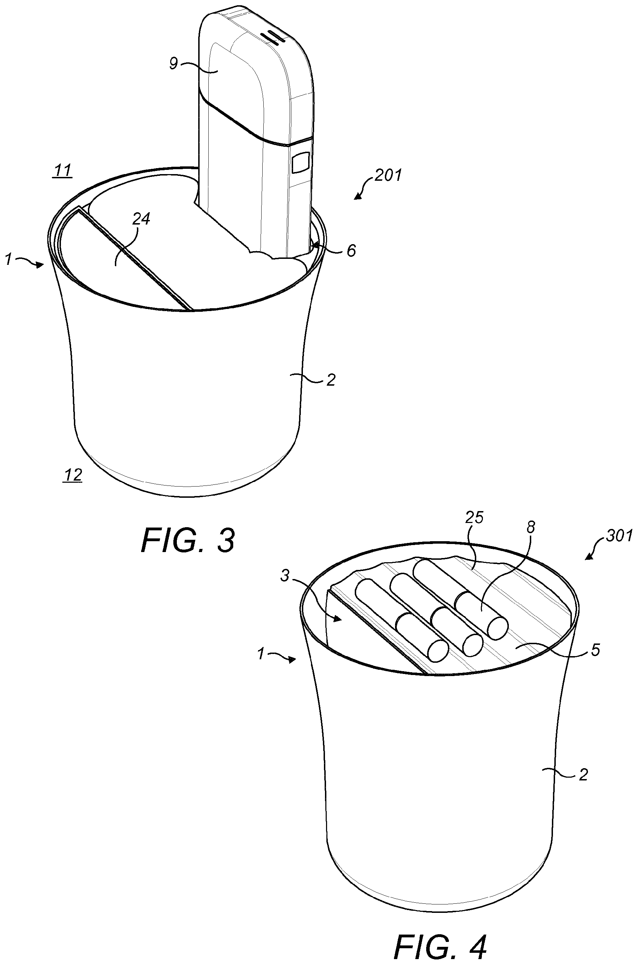

Figure 3 shows a container 201 according to a third embodiment of the present invention. The body portion 2 of the container 201 has the same structure as the body portion 2 of the first and second embodiments. Similar to the second embodiment, the cover portion 3 of the third embodiment sits within the top end 14 of the side wall 13.

In the third embodiment, the aperture 10 extends less than halfway across the cover portion 3. The aperture 10 is covered by a semi-circular lid 24 that is hinged along the flat side of the semi-circle to the cover portion 3. Similar to the second embodiment, the lid 24 opens inwardly. The lid is biased in a closed position wherein it covers the aperture 10.

In the third embodiment, the recess 6 is defined as a groove within the body of the cover portion 3. There are no elements projecting from the cover portion 3 around the recess 6. In this embodiment the recess 6 is shaped to receive an aerosol-generating device 9.

Figure 4 shows a container 301 according to a fourth embodiment of the present invention. The body portion 2 of the container 1 has the same structure as the body portion 2 of the first and second embodiments. Similar to the second embodiment, the cover portion 3 of the fourth embodiment sits within the top end 14 of the side wall 13. Similar to the third embodiment, the aperture 10 extends less than halfway across the cover portion 3. The aperture 10 is covered by a semi-circular lid 24 that is hinged along the flat side of the semi-circle to the cover portion 3. Similar to the second embodiment, the lid 24 opens inwardly. The lid is biased in a closed position wherein it covers the aperture 10.

In the fourth embodiment, the outer surface 11 of the cover portion 3 includes a number of parallel channels 5 forming the supporting means 4. The channels 5 are separated by parallel ridges 25 extending upwards from the outer surface 11 of the cover portion 3. The channels 5 are shaped to each receive one aerosol-generating article 8. The supporting means 4 is a separate element to the cover portion 3 itself. The supporting means 4 is attached to the outer surface 11 of the cover portion 3. The channels 5 have a curved based to conform to the profile of aerosol-generating articles 8 that have a circular cross section.

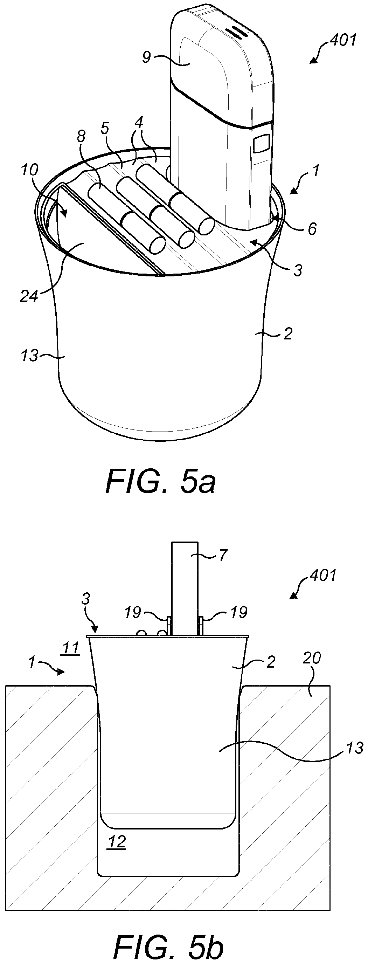

Figure 5a shows a container 401 according to a fourth embodiment of the present invention. The body portion 2 of the container 401 has the same structure as the body portion 2 of the first and second embodiments. Similar to the second embodiment, the cover portion 3 of the fifth embodiment sits within the top end 14 of the side wall 13. Similar to the third embodiment, the aperture 10 extends less than halfway across the cover portion 3. The aperture 10 is covered by a semi-circular lid 24 that is hinged along the flat side of the semi-circle to the cover portion 3. Similar to the second embodiment, the lid 24 opens inwardly. The lid is biased in a closed position wherein it covers the aperture 10.

In the fifth embodiment the supporting means 4 is designed to accommodate both aerosol-generating articles 8 and an aerosol-generating device 9. The supporting means 4 includes both channels 5 for aerosol-generating articles 8 and a recess 6 for receiving an aerosol-generating device 9. The channels 5 are positioned adjacent the aperture 10, and the recess 6 is positioned on the opposite side of the cover portion 3 to the aperture 10.

Figure 5b shows an alternative form of the fifth embodiment configured to hold both aerosol-generating articles 8 and a packet of aerosol-generating articles 7. In this form the recess 6 includes plates 19 extending upwards from the outer surface 11 of the cover portion 3. The recess 6 is sized to receive a packet of aerosol-generating articles 7. The container 401 of Figure 5b is received in a cup-holder 20 of a vehicle. The tapered side wall 13 allows the bottom end 12 of the body portion 2 to be inserted into the cup holder 20, until the external diameter of the side wall 13 is equal to the internal diameter of the cup-holder, and the container 401 is then held in position.

## Claims

1. A container (1, 101) configured to be received in a vehicle cup holder, the container (1, 101) comprising;
a body portion (2) defining an internal compartment, the body portion (2) comprising a closed bottom end (12) and an open top end (14); and
a cover portion (3) configured to cover the open top end (14) of the body portion (2);
wherein the cover portion (3) comprises an aperture (10) for accessing the internal compartment of the body portion (2), and support means for supporting one or more consumer articles on an outer surface (11) of the cover portion (3), and wherein the support means comprise at least one recessed portion (6) for receiving one or more consumer articles, the recessed portion (6) being defined by two parallel upwardly projecting plates (19) positioned on the cover portion (3).

2. A container (1, 101) according to claim 1, wherein at least one of the plates (19) has an arc-shaped circumferential edge.

3. A container (1, 101) according to claim 1 or 2, wherein the recessed portion (6) comprises a cross section configured to match an external transverse cross section of a consumer article.

4. A container (1, 101) according to any preceding claim, wherein the support means comprise at least one elongate channel (5).

5. A container (1, 101) according to claim 4, wherein at least a portion of the outer surface (11) of the cover portion (3) adjacent to the support means is corrugated into a series of parallel ridges (25) and grooves (5).

6. A container (1, 101) according to any preceding claim, wherein the projections (19) are integrally formed with the cover portion (3).

7. A container (1, 101) according to any preceding claim, wherein both the parallel plates (19) have an arc-shaped circumferential edge.

8. A container (1, 101) according to any preceding claim, wherein the height of the plates (19) is between 5 mm and 50 mm.

9. A container (1, 101) according to any preceding claim, wherein the cover portion (3) further comprises a funnel (21), the funnel (21) extending from the aperture (10) into the internal compartment of the body portion (2).

10. A container (101) according to any preceding claim, wherein the cover portion (3) further comprises a lid (24), the lid (24) movable between a first position in which the lid (24) covers the aperture (10), and a second position in which the internal compartment is accessible through the aperture (10), and wherein the lid (24) is hingedly connected to the cover (3).

11. A container (101) according to claim 10, wherein the distance between the plates (19) is between 10 mm and 25 mm.

12. A container (1, 101) according to any preceding claim, wherein the cover portion (3) is removably connected to the body portion (2).

13. A container (1, 101) according to any preceding claim, wherein an inner surface (17) of the cover portion (3), opposite the outer surface (11), comprises a gasket (15) for engaging with an inner face (18) of the top end (14) of the body portion (2) such that the cover portion (3) is retained on the body portion (2).

14. A container (1, 101) according to any preceding claim, wherein the body portion (2) is tapered, such that the diameter decreases from the top end (14) to the bottom end (12).

15. A container (1, 101) according to any preceding claim, wherein the consumer articles comprise one or more of an aerosol-generating article (7), an aerosol-generating device (9), and a packet of aerosol-generating articles (7).

## Patentansprüche

1. Behälter (1, 101), ausgelegt zur Aufnahme in einem Fahrzeuggetränkehalter, der Behälter (1, 101) aufweisend:
einen Körperabschnitt (2), eine innere Kammer definierend, wobei der Körperabschnitt (2) ein geschlossenes unteres Ende (12) und ein offenes oberes Ende (14) aufweist; und
ein Abdeckungsteil (3), ausgelegt zur Abdeckung des offenen oberen Endes (14) des Körperabschnitts (2);
wobei das Abdeckungsteil (3) eine Aussparung (10) für den Zugang zu der inneren Kammer des Körperabschnitts (2) und Auflagemittel zur Auflage eines oder mehrerer Konsumartikel auf einer Außenfläche (11) des Abdeckungsteils (3) aufweist, und wobei die Auflagemittel zumindest einen ausgesparten Abschnitt (6) zur Aufnahme eines oder mehrerer Konsumartikel aufweisen, wobei der ausgesparte Abschnitt (6) durch zwei parallele, nach oben vorstehende, auf dem Abdeckungsteil (3) positionierte Platten (19) definiert ist.

2. Behälter (1, 101) nach Anspruch 1, wobei zumindest eine der Platten (19) eine bogenförmige umlaufende Kante hat.

3. Behälter (1, 101) nach Anspruch 1 oder 2, wobei der ausgesparte Abschnitt (6) einen zur Angleichung an einen äußeren Querschnitt eines Konsumartikels ausgelegten Querschnitt aufweist.

4. Behälter (1, 101) nach einem der vorhergehenden Ansprüche, wobei die Auflagemittel zumindest einen länglichen Kanal (5) aufweisen.

5. Behälter (1, 101) nach Anspruch 4, wobei zumindest ein Abschnitt der Außenfläche (11) des Abdeckungsteils (3) neben den Auflagemitteln in eine Reihe von parallelen Rippen (25) und Nuten (5) gewellt ist.

6. Behälter (1, 101) nach einem der vorhergehenden Ansprüche, wobei die Vorsprünge (19) einstückig mit dem Abdeckungsteil (3) ausgebildet sind.

7. Behälter (1, 101) nach einem der vorhergehenden Ansprüche, wobei beide parallelen Platten (19) eine bogenförmige umlaufende Kante haben.

8. Behälter (1, 101) nach einem der vorhergehenden Ansprüche, wobei die Höhe der Platten (19) zwischen 5 mm und 50 mm beträgt.

9. Behälter (1, 101) nach einem der vorhergehenden Ansprüche, wobei das Abdeckungsteil (3) ferner einen Trichter (21) aufweist, wobei sich der Trichter (21) von der Aussparung (10) in die innere Kammer des Körperabschnitts (2) erstreckt.

10. Behälter (101) nach einem der vorhergehenden Ansprüche, wobei das Abdeckungsteil (3) ferner einen Deckel (24) aufweist, wobei der Deckel (24) zwischen einer ersten Stellung, in der der Deckel (24) die Aussparung (10) abdeckt, und einer zweiten Stellung, in der die innere Kammer durch die Aussparung (10) zugänglich ist, beweglich ist, und wobei der Deckel (24) gelenkig mit der Abdeckung (3) verbunden ist.

11. Behälter (101) nach Anspruch 10, wobei der Abstand zwischen den Platten (19) zwischen 10 mm und 25 mm beträgt.

12. Behälter (1, 101) nach einem der vorhergehenden Ansprüche, wobei das Abdeckungsteil (3) entfernbar mit dem Körperabschnitt (2) verbunden ist.

13. Behälter (1, 101) nach einem der vorhergehenden Ansprüche, wobei eine der Außenfläche (11) gegenüberliegende Innenfläche (17) des Abdeckungsteils (3) eine Dichtung (15) zum Eingriff mit einer Innenfläche (18) des oberen Endes (14) des Körperabschnitts (2) aufweist, sodass der Abdeckungsteil (3) an dem Körperabschnitt (2) zurückgehalten wird.

14. Behälter (1, 101) nach einem der vorhergehenden Ansprüche, wobei der Körperabschnitt (2) verjüngt ist, sodass der Durchmesser von dem oberen Ende (14) zu dem unteren Ende (12) abnimmt.

15. Behälter (1, 101) nach einem der vorhergehenden Ansprüche, wobei die Konsumartikel einen oder mehrere von einem aerosolerzeugenden Artikel (7), einer Aerosolerzeugungsvorrichtung (9) und einem Paket von aerosolerzeugenden Artikeln (7) aufweisen.

## Revendications

1. Récipient (1, 101) configuré pour être reçu dans un support de gobelet de véhicule, le récipient (1, 101) comprenant ;
une partie de corps (2) définissant un compartiment interne, la partie de corps (2) comprenant une extrémité inférieure fermée (12) et une extrémité supérieure ouverte (14) ; et
une partie de bouchon (3) configurée pour recouvrir l'extrémité supérieure ouverte (14) de la partie de corps (2) ;
dans lequel la partie de bouchon (3) comprend une ouverture (10) destinée à accéder au compartiment interne de la partie de corps (2), et des moyens de support destinés à supporter un ou plusieurs articles de consommation sur une surface externe (11) de la partie de bouchon (3), et dans lequel les moyens de support comprennent au moins une partie évidée (6) destinée à recevoir un ou plusieurs articles de consommation, la partie évidée (6) étant définie par deux plaques parallèles faisant saillie vers le haut (19) positionnées sur la partie de bouchon (3).

2. Récipient (1, 101) selon la revendication 1, dans lequel au moins une des plaques (19) a un bord circonférentiel en forme d'arc.

3. Récipient (1, 101) selon la revendication 1 ou 2, dans lequel la partie évidée (6) comprend une coupe transversale configurée pour correspondre à une coupe transversale extérieure d'un article de consommation.

4. Récipient (1, 101) selon l'une quelconque des revendications précédentes, dans lequel les moyens de support comprennent au moins un canal allongé (5).

5. Récipient (1, 101) selon la revendication 4, dans lequel au moins une partie de la surface externe (11) de la partie de bouchon (3) adjacente aux moyens de support est ondulée en une série de nervures (25) et de rainures (5) parallèles.

6. Récipient (1, 101) selon l'une quelconque des revendications précédentes, dans lequel les saillies (19) sont formées d'un seul tenant avec la partie de bouchon (3).

7. Récipient (1, 101) selon l'une quelconque des revendications précédentes, dans lequel les deux plaques parallèles (19) ont un bord circonférentiel en forme d'arc.

8. Récipient (1, 101) selon l'une quelconque des revendications précédentes, dans lequel la hauteur des plaques (19) est entre 5 mm et 50 mm.

9. Récipient (1, 101) selon l'une quelconque des revendications précédentes, dans lequel la partie de bouchon (3) comprend en outre un entonnoir (21), l'entonnoir (21) s'étendant depuis l'ouverture (10) dans le compartiment interne de la partie de corps (2).

10. Récipient (101) selon l'une quelconque des revendications précédentes, dans lequel la partie de bouchon (3) comprend en outre un couvercle (24), le couvercle (24) étant mobile entre une première position dans laquelle le couvercle (24) recouvre l'ouverture (10), et une seconde position dans laquelle le compartiment interne est accessible à travers l'ouverture (10), et dans lequel le couvercle (24) est raccordé de manière articulée au bouchon (3).

11. Récipient (101) selon la revendication 10, dans lequel la distance entre les plaques (19) est entre 10 mm et 25 mm.

12. Récipient (1, 101) selon l'une quelconque des revendications précédentes, dans lequel la partie de bouchon (3) est raccordée de manière amovible à la partie de corps (2).

13. Récipient (1, 101) selon l'une quelconque des revendications précédentes, dans lequel une surface interne (17) de la partie de bouchon (3), opposée à la surface externe (11), comprend un joint (15) destiné à venir en prise avec une face interne (18) de l'extrémité supérieure (14) de la partie de corps (2) de sorte que la partie de bouchon (3) est retenue sur la partie de corps (2).

14. Récipient (1, 101) selon l'une quelconque des revendications précédentes, dans lequel la partie de corps (2) est effilée, de sorte que le diamètre diminue depuis l'extrémité supérieure (14) vers l'extrémité inférieure (12).

15. Récipient (1, 101) selon l'une quelconque des revendications précédentes, dans lequel les articles de consommation comprennent un ou plusieurs parmi un article de génération d'aérosol (7), un dispositif de génération d'aérosol (9) et un paquet d'articles de génération d'aérosol (7).
